# EUROPÄISCHE PATENTSCHRIFT

(11) **EP 2 269 798 B1**
(45) Veröffentlichungstag und Bekanntmachung des Hinweises auf die Patenterteilung: **20.06.2012**
(21) Anmeldenummer: 10167541.1
(22) Anmeldetag: 28.06.2010
(51) Int. Cl.: B29C 45/17

(54) **Herstellung eines thermoplastischen Gegenstandes mit einem Hohlraum**
Production of a thermoplastic object with a cavity
Fabrication d'un objet thermoplastique doté d'un espace creux

(30) Priorität: 03.07.2009 DE 102009031591
(43) Veröffentlichungstag der Anmeldung: 05.01.2011
(73) Patentinhaber: POLYTEC PLASTICS Germany GmbH & Co. KG, 49393 Lohne (DE)
(72) Erfinder: Jung-König, Alexander, 65552, Limburg/Lahn (DE); Janßen, Hans, 49413, Dinklage (DE)
(74) Vertreter: von Kreisler Selting Werner

(56) Entgegenhaltungen:
- JP-A- 6 285 895
- JP-A- 11 114 997

## Beschreibung

Gegenstand der Erfindung ist ein Verfahren zur Herstellung eines thermoplastischen Gegenstandes mit einem Hohlraum sowie die Verwendung des Verfahrens zur Herstellung von nichtlinearen Rohren.

Thermoplastische Gegenstände mit einem Hohlraum können bekanntermaßen durch Spritzgussverfahren hergestellt werden, wobei man die Hohlraumausformung durch verschiedene Medien erreichen kann.

Ein derartiges Verfahren und eine vergleichbare Vorrichtung sind aus DE 199 29 700 A1 bekannt. Gemäß diesem bekannten Verfahren wird zunächst nach dem Einfüllen des plastischen Kunststoffs oder der Kunststoffschmelze in die Spritzgießform ein Gasvolumen durch eine Einlassöffnung zur Ausbildung des Hohlraums eingeleitet, wonach dieses Gasvolumen aus dem Hohlraum über eine andere Öffnung wieder abgelassen wird. Es ist also dafür zu sorgen, dass dieses Gas mit ausreichendem Druck eingeführt wird, das heißt, für dieses Einlasen des Gases in die Spritzgießform ist eine entsprechende Vorrichtung zur Erzeugung des Gasdrucks erforderlich.

DE 103 39 859 B3 beschreibt, dass zur Herstellung eines Kunst-Bauteils (2), welches einen Innenhohlraum (3) hat, in eine Spritzgießform (4) und deren Kavität (6) zunächst Kunststoff eingespritzt wird und anschließend zur Verdrängung von Kunststoffschmelze aus dem zu bildenden Innenhohlraum (3) Gas unter Druck in die noch flüssige Kunststoffschmelze injiziert wird, wonach zur Kühlung des Kunststoffs auch eine Kühlflüssigkeit in diesen Innenhohlraum (3) eingeleitet wird. Damit diese Kühlung schnellstmöglich erfolgen kann, wird das Gas mit Hilfe der Kühlflüssigkeit komprimiert und in die Kunststoffschmelze eingetragen beziehungsweise injiziert, so dass also die Kühlflüssigkeit dem Gas unmittelbar folgt, wobei sie schon in den Innenhohlraum (3) gelangen kann, bevor dieser durch das Gas fertiggestellt ist, das heißt, es können Gas und Kühlflüssigkeit schon gleichzeitig in dem zu bildenden Innenhohlraum (3) vorhanden sein.

Bekanntermaßen stellt die Hohlraumausformung per Projektil (Projektil-Injektions-Technik, PIT) relativ geringe Ansprüche an den Werkstoff als die per Gas (GIT) oder Wasser (WIT). Die für die letztgenannten Verfahren optimierten Rohstoffe führen zwar auch bei der PIT zu verbesserten Resultaten, jedoch eignen sich für die meisten Anwendungen aber ebenso Standartwerkstoffe mit unterschiedlichen Verstärkungsmaterialien.

Aus "http://www.kunststoffweb.de/neueprodukte/detail.asp?s=1&tid =101960&q=projetil%2Dinjektions" ist bekannt, dass es bei PIT keiner zweiten Verfahrenskomponente für die Hohlraumausformung wie bei der 2K-WIT bedarf. Daher können Verzweigungen bei PIT wirtschaftlich und sicher realisiert werden, als bei 2K-Fluid-Injektionstechniken. Abzweiger, Schnellkupplungen, Laschen und Halter werden bei der PIT zusammen mit dem Rohr im selben Schuss gespritzt, so dass nur ein Befüllungsvorgang erforderlich ist.

JP 11 114997 A offenbart ein Verfahren zur Herstellung eines thermoplastischen Gegenstandes mit einem Hohlraum, wobei man
(a) in eine Formkavität (1) mit einer Einlassöffnung (11A,11B) eine vordefinierte Menge eines fließfähigen Thermoplasten unter Verdrängung de in der Kavität enthaltenden Fluides einbringt und
(b) einen Formkörper (20,21) unter Einsatz eines Fluides gegen die Einlassöffnung (11A,11B) treibt.

Der Hauptvorteil von PIT Produkten gegenüber GIT und WIT liegt in dem Verhältnis von Innendurchmesser zu Wandstärke und Außendurchmesser. Hier setzt das Verfahren den Benchmark.

In WO 96/26062 wird ein Verfahren und eine Vorrichtung zum Formen eines hohlen Gegenstandes mittels der PIT beschrieben. Insbesondere wird hier ein Hohlformverfahren beschrieben, das das Injizieren geschmolzenen Kunstharzes in ein Hauptformnest umfasst, das einen Einlass aufweist, das mit einem schwimmenden Kern an seinem einen Ende und einem Nebenformnest am anderen Ende durch einen öffenbaren Verbindungseinlass versehen ist. Ein komprimiertes Fluid wird vom Einlass injiziert, um den schwimmenden Kern zum Verbindungseinlass hinzubewegen und das Kunstharz abgegeben, das sich entlang dem Zentrum des Hauptformnestes befindet. Dieses wird in das Nebenformnest durch den Verbindungseinlass durch Bewegen eines schwimmenden Kerns transportiert. Wesentliches und damit kennzeichnendes Merkmal dieses Verfahrens ist, dass das Kunstharz und der schwimmende Kern in das Nebenformnest durch den Verbindungseinlass bewegt wird. Das in dem Nebenformnest befindliche Kunstharz kann nach dem Abkühlen und Vermahlen anschließend erneut in die Extrusionsschnecke eingebracht und so eine Wiederverwendung zugeführt werden.

Nachteilig an diesem Verfahren ist jedoch, dass die Gesamtmenge des in das Nebenformnest verbrachten Kunstharzes vermahlen und erneut aufgeheizt werden muss. Demgegenüber besteht die Aufgabe der vorliegenden Erfindung in der Bereitstellung eines gegenüber diesem Stand der Technik vereinfachten Verfahrens unter möglichst großer Schonung des eingesetzten Kunstharzes, insbesondere eines Thermoplasten.

Die vorgenannte Aufgabe der vorliegenden Erfindung wird in einer ersten Ausführungsform gelöst durch ein Verfahren zur Herstellung eines thermoplastischen Gegenstandes mit einem Hohlraum, wobei man (a) in eine Formkavität mit einer Einlassöffnung und einer durch einen Formkörper verschließbaren Auslassöffnung eine vordefinierte Menge eines fließfähigen Thermoplasten unter Verdrängung des in der Kavität enthaltenden Fluides einbringt und (b) den Formkörper unter Einsatz eines Fluides gegen die Einlassöffnung treibt und den, den Hohlraum bildenden, fließfähigen Thermoplasten zu der Einlassöffnung zurückfördert, bis der Formkörper die Einlassöffnung verschließt.

In einem ersten Verfahrensschritt wird das Formennest (die Kavität) mit dem Kunststoffmaterial gefüllt und dabei das hierin befindliche Fluid, in der Regel Luft, an der Kavität ausgetrieben.

Mit Hilfe der vorliegenden Erfindung wird anschließend die in die Formkavität eingebrachte thermoplastische Masse soweit erforderlich praktisch vollständig durch die Einlassöffnung zurückbefördert, so dass die in diesem Material enthaltende Wärme vollständig erhalten bleiben kann. Bei diesem Masserückdrückverfahren lässt sich gewährleisten, dass die Einlassöffnung durch den eingebrachten Formkörper am Ende des Rückdrückverfahrens soweit verschlossen ist, dass ein erneutes Aufheizen des Materials nicht erforderlich ist. Dieses steht somit für den nächsten Schuss bereit. Insbesondere ist die Ausbildung einer Nebenkavität nicht erforderlich.

Auch bei einem Masserückdrückverfahren mit mehreren Anspritzpunkten kann das erfindungsgemäße Verfahren eingesetzt werden. Das Masserückdrückverfahren kann so ausgeführt werden, dass der Kunststoff über einen Anspritzpunkt an einem Ende der Spritzgießform eingespritzt wird, bis diese vollständig gefüllt ist. Dann kann mit Hilfe des Formkörpers vom Ende der Spritzgießform beziehungsweise des Bauteils die Kunststoffmasse wieder hinausgedrückt werden.

Das beschriebene Verfahren, bei welchem der Thermoplast in eine Spritzgießform befördert wird, kann auch in einem Mehrfachwerkzeug zur Anwendung kommen, wobei ein Werkzeug derart aufgebaut ist, dass mehrere Kavitäten mit entsprechenden Injektoren und gegebenenfalls mehreren Formkörpern versehen sind. Alle Kavitäten sollten dabei sowohl gleichzeitig als auch unabhängig voneinander ansteuerbar sein.

Denkbar ist auch, dass das erfindungsgemäße Verfahren für Bauteile angewendet wird, bei denen Einlegeteile beziehungsweise Folien und Bleche sowie Textilien (Gewebe, Geflechte, Gewirke oder Vliese) in die Form eingelegt werden, die dann hinterspritzt beziehungsweise umspritzt werden. Diese Einlegeteile können als Verstärkung, als Dekoration oder zum Erfüllen von Zusatzfunktionen dienen.

Das erfindungsgemäße Verfahren ermöglicht auch, Hohlkörper beziehungsweise Hohlkanäle innerhalb eines komplexen Bauteils dadurch zu realisieren, dass ein oder mehrere Kanäle voneinander abzweigen. Es sind Bauteile denkbar, in denen ein oder mehrere Hohlkanäle zur mechanischen Stabilität des gesamten Bauteils beitragen.

Im Stand der Technik ist für das PIT Verfahren eine große Anzahl von verschiedenartigen Formkörpern zum Zurückdrängen der Kunststoffmasse beschrieben worden. Diese können die unterschiedlichsten chemischen Zusammensetzungen aufweisen. Erfindungsgemäß ist es jedoch besonders bevorzugt, wenn der Formkörper, insbesondere von kugeliger Gestalt, die gleich chemische Zusammensetzung wie der Thermoplast aufweist. Somit ist es möglich, die komplette Masse des den Hohlraum bildenden fließfähigen Thermoplasten zu der Einlassöffnung zurückzufördern, um das vollständige Material einschließlich des Formkörpers der Spritzeinrichtung zuzuführen. Somit ist ein sortenreines Material vorhanden, das weiterverwendet werden kann.

Insbesondere ist es hier möglich ein entsprechendes thermoplastisches Material einzusetzen, das trotz der gleichen chemischen Eigenschaften bedingt durch seine innere Wärmekapazität nicht schmilzt, sondern durch den Hohlraum durchgeführt werden kann.

Erfindungsgemäß wird ein thermoplastisches Material eingesetzt, dessen mechanische und thermische Eigenschaften durch Hinzufügen von Füllstoff- oder Verstärkungsmaterialien in Partikel- oder Faserform verändert werden können. So kann als Basismaterial ein Polystyrol-Polyolefin, Polyamid, Acrylharz, POM, PPS, modifiziertes PPE oder Polycarbonat eingesetzt werden. Besonders bevorzugt im Sinne der vorliegenden Erfindung ist der Thermoplast ausgewählt aus gegebenenfalls verstärktem Polyamid oder Polyolefin, insbesondere Polypropylen.

Das Verstärkungsmaterial kann beispielsweise Talkum, Wollastonit (Calciumsilikat) oder Calciumcarbonat enthalten. Als faserförmiges Verstärkungsmaterial können beispielsweise Glasfasern, Keramikfasern, Kohlenstofffasern, pflanzliche oder tierische Fasern oder Metallfasern eingesetzt werden. Der Gehalt der Verstärkungsmaterialien wird nach den gewünschten physikalischen Eigenschaften ausgewählt, die für die Anwendung erforderlich sind.

Die Füllung der Kavität kann nach beliebigen Verfahren erfolgen. Insbesondere erfolgt das Einbringen durch Einspritzen, vorzugsweise mit einer Spritzgussschnecke.

Ein weiterer wichtiger Parameter ist die Viskosität der Kunststoffschmelze, die während des Spritzgießprozesses mit Parametern wie der Massetemperatur und der Einspritzgeschwindigkeit des Kunststoffes variiert werden kann. Hier führen niedrigere Temperaturen als die vom Materialhersteller empfohlenen zu höheren Viskositäten und damit zu guten Ergebnissen. Spezielle Materialien mit höheren Viskositäten und speziellen Füllstoffen erhöhen die Qualität der Bauteile hinsichtlich konstanter Restwanddicke und glatter Innenoberfläche des erzeugten Innhohlraums sowie die Reproduzierbarkeit des Prozesses beziehungsweise des Verfahrens.

Die Einlassöffnung (Anspritzpunkt) der Kavität sollte erfindungsgemäß so gestaltet sein, dass sie beim Rückdrücken des Formkörpers die Möglichkeit eröffnet, dass dieser den Querschnitt derart vermindert, dass ein weiteres Eintreten von Thermoplast in die Kavität verhindert wird, vielmehr der Thermoplast in Richtung der Spritzeinrichtung zurückgedrückt wird. Besonders bevorzugt im Sinne der vorliegenden Erfindung wird die Einlassöffnung derart bereitgestellt, dass diese eine trichterförmige oder stufenförmige Erweiterung des Querschnitts in Richtung der Formkavität aufweist. In diesem Fall ist es möglich, dass der Formkörper die Einlassöffnung mehr oder weniger vollständig blockiert, so dass der dahinterliegende Bereich von der Formkavität abgetrennt werden kann.

Besonders bevorzugt im Sinne der vorliegenden Erfindung ist daher der maximale Querschnitt des Trichter größer als der Querschnitt des Formkörpers, so dass zunächst eine Behinderung des Rückflusses erfolgt, bevor die Einlassöffnung vollständig verschlossen wird. Alternativ hierzu kann aber auch der maximale Querschnitt des Trichters derart sein, dass dieser kleiner ist als der Querschnitt des Formkörpers, so dass die Einlassöffnung unmittelbar verschlossen wird.

Damit der Formkörper den Hohlraum bilden kann, muss dieser durch die Kavität hindurchgetrieben werden. Dies geschieht insbesondere mit einem Fluid, das ausgewählt ist aus komprimierten Gasen und/oder aus Flüssigkeiten. Hier kann im Wesentlichen auf die Standardanwendung der PIT Verfahren zurückgegriffen werden, die dem Fachmann als solches ohne Weiteres bekannt sind.

Das erfindungsgemäße Verfahren eignet sich insbesondere zur Herstellung von nichtlinearen Rohren, d. h. zur Herstellung von Hohlformartikeln.

Im folgenden wird ein typischer Arbeitsablauf zur Nacharbeitung des erfindungsgemäßen Verfahrens beschrieben.

Zunächst wird in ein geöffnetes Werkzeug der Formkörper (Projektil) gegenüber dem Anspritzpunkt eingelegt. Nach Schließen des Werkzeugs und Plastifizieren des Kunststoffmaterials wird in der Plastifiziereinheit eine entsprechende Menge des Spritzvolumens dosiert. Im nächsten Schritt erfolgt die Injektion des plastifizierten Materials, gegebenenfalls über einen Heißkanal, insbesondere gesteuert durch eine Nadelverschlussdüse. Hierbei wird das gegenüberliegende Projektil umspritzt. Nach eine kurzen Verweilzeit wird ein Injektor geöffnet und mit Druck durch ein komprimierbares Fluid oder ein Gas beaufschlagt. Hierbei wird das Projektil durch den Druck in Richtung Anspritzpunkt bewegt und das durch das Projektil verdrängte Material in die Plastifiziereinheit gegebenenfalls über einen Heißkanal gedrückt, bis das Projektil am anderen Ende der Kavität durch seine Form die Einlassöffnung verschließt. Nach einer Verweilzeit wird der am Injektor anliegende Druck abgelassen, das Werkzeug geöffnet und das fertige Formteil entformt.

## Patentansprüche

1. Verfahren zur Herstellung eines thermoplastischen Gegenstandes mit einem Hohlraum, wobei man
(a) in eine Formkavität mit einer Einlassöffnung und einer durch einen Formkörper verschließbaren Auslassöffnung eine vordefinierte Menge eines fließfähigen Thermoplasten unter Verdrängung des in der Kavität enthaltenden Fluides einbringt und
(b) den Formkörper unter Einsatz eines Fluides gegen die Einlassöffnung treibt und den, den Hohlraum bildenden, fließfähigen Thermoplasten zu der Einlassöffnung zurückfördert, bis der Formkörper die Einlassöffnung verschließt.

2. Verfahren nach Anspruch 1, **dadurch gekennzeichnet, dass** man einen Formkörper einsetzt, der die gleiche chemische Zusammensetzung wie der Thermoplast aufweist.

3. Verfahren nach Anspruch 1 oder 2, **dadurch gekennzeichnet, dass** der Thermoplast ausgewählt ist aus gegebenenfalls verstärktem Polyamid oder Polyolefin, insbesondere Polypropylen.

4. Verfahren nach einem der Ansprüche 1 bis 3, **dadurch gekennzeichnet, dass** man den Thermoplasten durch eine Spritzgussschnecke zu der Formkavität fördert.

5. Verfahren nach einem der Ansprüche 1 bis 4, **dadurch gekennzeichnet, dass** man eine Einlassöffnung einsetzt, die eine trichterförmige oder stufenförmige Erweiterung des Querschnitts in Richtung der Formkavität aufweist.

6. Verfahren nach Anspruch 5, **dadurch gekennzeichnet, dass** der maximale Querschnitt des Trichters größer oder kleiner als der Querschnitt des Formkörpers ist.

7. Verfahren nach einem der Ansprüche 1 bis 6, **dadurch gekennzeichnet, dass** das Fluid ausgewählt ist aus komprimierten Gasen und/oder Flüssigkeiten.

8. Verwendung des Verfahrens nach einem der Ansprüche 1 bis 7 zur Herstellung von nichtlinearen Rohren.

## Claims

1. A process for producing a thermoplastic object with a hollow space, wherein
(a) a predefined amount of a flowable thermoplast is introduced into a mold cavity having an inlet opening and an outlet opening that can be sealed by a molded part, displacing the fluid contained in the cavity; and
(b) the molded part is driven against the inlet opening using a fluid, and the flowable thermoplast forming the hollow space is conveyed back to the inlet opening until the molded part seals the inlet opening.

2. The process according to claim 1, **characterized in that** a molded part having the same chemical composition as the thermoplast is employed.

3. The process according to claim 1 or 2, **characterized in that** said thermoplast is selected from optionally reinforced polyamide or polyolefin, especially polypropylene.

4. The process according to any of claims 1 to 3, **characterized in that** said thermoplast is conveyed to said mold cavity through an injection-molding screw.

5. The process according to any of claims 1 to 4, **characterized in that** an inlet opening having a funnel-shaped or step-like expansion of the cross-section in the direction of the mold cavity is employed.

6. The process according to claim 5, **characterized in that** the maximum cross-section of the funnel is larger or smaller than the cross-section of the molded part.

7. The process according to any of claims 1 to 6, **characterized in that** said fluid is selected from compressed gases and/or liquids.

8. Use of the process according to any of claims 1 to 7 for producing non-linear tubes.

## Revendications

1. Procédé de production d'un objet thermoplastique avec un espace creux, comprenant les étapes consistant à
(a) introduire une quantité prédéfinie d'un matériau thermoplastique fluide dans une cavité de moule avec une ouverture d'entrée et une ouverture de sortie fermable par une pièce moulée, déplaçant le fluide contenu dans la cavité et
(b) pousser la pièce moulée vers l'ouverture d'entrée utilisant un fluide, et renvoyer le matériau thermoplastique fluide formant l'espace creux vers l'ouverture d'entrée jusqu'à ce que la pièce moulée ferme l'ouverture d'entrée.

2. Procédé selon la revendication 1, **caractérisé en ce que** l'on utilise une pièce moulée ayant la même composition chimique que ledit matériau thermoplastique.

3. Procédé selon la revendication 1 ou 2, **caractérisé en ce que** ledit matériau thermoplastique est choisi parmi le polyamide ou le polyoléfine, éventuellement renforcé, notamment le polypropylène.

4. Procédé selon l'une quelconque des revendications 1 à 3, **caractérisé en ce que** ledit matériau thermoplastique est transporté vers la cavité de moule par une vis de moulage par injection.

5. Procédé selon l'une quelconque des revendications 1 à 4, **caractérisé en ce que** l'on utilise une ouverture d'entrée ayant un évasement de la section transversale en forme d'entonnoir ou en gradin en direction de la cavité de moule.

6. Procédé selon la revendication 5, **caractérisé en ce que** la section maximale de l'entonnoir est plus grand ou plus petit que la section de la pièce moulée.

7. Procédé selon l'une quelconque des revendications 1 à 6, **caractérisé en ce que** ledit fluide est choisi parmi les gaz et/ou liquides comprimés.

8. Utilisation du procédé selon l'une quelconque des revendications 1 à 7 pour la production de tubes non linéaires.
